# EUROPÄISCHE PATENTSCHRIFT

(11) **EP 3 330 026 B1**
(45) Veröffentlichungstag und Bekanntmachung des Hinweises auf die Patenterteilung: **05.01.2022**
(21) Anmeldenummer: 17001929.3
(22) Anmeldetag: 24.11.2017
(51) Int. Cl.: B23D 43/06, B23D 37/00, B23B 27/08

(54) **DREHRÄUMWERKZEUG**
ROTARY BROACH
OUTIL DE BROCHAGE ROTATIF

(30) Priorität: 05.12.2016 DE 102016014496
(43) Veröffentlichungstag der Anmeldung: 06.06.2018
(73) Patentinhaber: AUDI AG, 85045 Ingolstadt (DE)
(72) Erfinder: Kopton, Peter, DE - 85092 Kösching (DE)

(56) Entgegenhaltungen:
- EP-A1- 3 246 125
- EP-A2- 2 570 230
- WO-A1-2013/088884
- WO-A1-2014/171244
- WO-A1-2015/198740
- JP-U- S62 138 503
- US-A- 6 098 258

## Beschreibung

Die Erfindung betrifft ein Drehräumwerkzeug für eine Drehräummaschine, nach dem Oberbegriff des Patentanspruches 1, die bei einer Kurbelwellenbearbeitung einsetzbar ist. US 6 098 258 offenbart ein solches Werkzeug.

Eine Kurbelwelle weist bekanntermaßen Lagersitze für Hauptlager und für Hublager auf. Die Hauptlagersitze sind zusammen mit dem Zapfenende und dem Flanschende der Kurbelwelle koaxial zur Kurbelwellenachse angeordnet, während die Hublagersitze über Kurbelwangen exzentrisch zur Kurbelwellenachse angeordnet sind.

Aus der DE 10 2009 060 926 A1 ist ein Verfahren zum Bearbeiten von Haupt- und Hublagern von Kurbelwellen bekannt. Bei der Kurbelwellenbearbeitung können neben Fräs- oder Drehoperationen auch Drehräumverfahren zum Einsatz kommen, mit deren Hilfe die Kurbelwellen-Lagersitze endbearbeitet werden können. Bei einem Drehräumverfahren wird die Schnittgeschwindigkeit durch das rotierende Werkzeug erzeugt. Das rotierende Werkstück wird von einem rotatorisch drehbewegten Räumwerkzeug bearbeitet. Im Drehräumprozess des Hauptlagers ist die Kurbelwelle beidseitig zentrisch in angetriebenen Hauptspindeln der Drehräummaschine eingespannt. Dagegen ist bei einer Hublager-Bearbeitung die Kurbelwelle unter Verwendung von Exzenter-Spannfutter so eingespannt, dass das Hublager koaxial zur Hauptspindel-Drehachse ausgerichtet ist.

Das dabei verwendete Drehräumwerkzeug weist einen scheibenförmigen Werkzeugträger auf, der außenumfangsseitig mit zumindest einem Schneidelement bestückt ist, das eine radial äußere Schneidkante zum Drehräumen des Lagersitzes aufweist. An dem Drehräumwerkzeug können neben dem zumindest einen Schneidelement eine Vielzahl weiterer Schneidelemente montiert sein, mit denen weitere Prozessschritte durchführbar sind. Durch eine solche Bestückung mit unterschiedlichen Schneidelementen kann die Kurbelwelle ohne Werkzeugaustausch bearbeitet werden. Anstelle eines aufwändigen Werkzeugwechsels erfolgt einfach ein Weiterdrehen des Werkzeugträgers.

Bei dem obigen Drehräumprozess wird das Räumwerkzeug mit seinem Schneidelement in einer kontinuierlichen langsamen Rotationsbewegung über einen Zustellvorschub in eine Arbeitsstellung bewegt. In der Arbeitsstellung trägt das Schneidelement mit seiner Schneidkante ein Materialaufmaß am Lagersitz ab. Im Stand der Technik ist das Schneidelement in einer unveränderlichen Position starr am Räumwerkzeug festgelegt, wodurch im Drehräumprozess die zu fertigende Lagersitz-Geometrie nicht ohne weiteres variierbar ist.

Die Aufgabe der Erfindung besteht darin, ein Drehräumwerkzeug sowie ein Verfahren zum Drehräumen, bereitzustellen, bei dem in einfacher Weise zusätzliche Freiheitsgrade bei der Bearbeitung eines rotationssymmetrischen Werkstück-Außenumfangs, insbesondere eines Kurbelwellen-Lagersitzes, ermöglicht sind.

Die Aufgabe ist durch die Merkmale des Patentanspruches 1 oder 6 gelöst. Bevorzugte Weiterbildungen der Erfindung sind in den Unteransprüchen offenbart.

Gemäß der Erfindung ist das Schneidelement nicht mehr in einer unveränderlichen Position am Räumwerkzeug festgelegt, sondern vielmehr schwenkbar im Werkzeugträger des Räumwerkzeugs gelagert. Auf diese Weise kann die Oberflächen-Geometrie am Werkstück-Außenumfang während des Drehräumprozesses in einfacher Weise eingestellt oder variiert werden. Erfindungswesentlich ist es dabei, dass eine Schwenkposition des Schneidelementes auch während des Drehräumprozesses gesteuert geändert werden kann.

Das Schneidelement ist um eine Schneidelement-Drehachse schwenkbar. Die Schneidelement-Drehachse verläuft quer zur Werkzeugachse und schneidet die Werkzeugachse. Mit der Änderung der Schwenkposition ändert sich automatisch auch die Neigung des Schneidelements mit Bezug auf die Werkzeugachse.

In einer technischen Realisierung kann die Schneidkante des Schneidelementes durchgängig in einer planen Schneidebene verlaufen, und zwar zwischen zwei Schneid-Ecken. Im Drehräumprozess bewegen sich die beiden Schneid-Ecken auf einer Kreisbahn, die einen Eckradius aufweist. Der Schneidkanten-Bereich zwischen den beiden Schneid-Ecken bewegt sich ebenfalls auf einer Kreisbahn, deren Radius kleiner ist als der obige Eckradius ist und sich bis zu einem Minimalwert in der Kanten-Mitte zwischen den beiden Schneid-Ecken reduziert.

Das Schneidelement ist als ein Drehkörper realisiert, der in einer Werkzeugaufnahme des Werkzeugträgers drehgelagert ist. Im Drehräumprozess kann das Schneidelement bevorzugt CNC-gesteuert werden.

Zu Beginn des Drehräumprozesses kann das Drehwerkzeug mit seinem Schneidelement um einen Zustellvorschub bis in eine Arbeitsstellung drehbewegt werden, in der das Drehräumen erfolgt. In einer ersten Prozessführung kann das Schneidelement mit einer zunächst unveränderlichen Start-Drehposition bis in die Arbeitsstellung zugestellt (das heißt gedreht) werden. Erst nach Erreichen der Arbeitsstellung kann eine Schwenkbewegung des Schneidelementes von der Start-Drehposition in eine End-Drehposition erfolgen.

In einer zweiten Prozessführung kann der zwischen der Schneidkante und einer zur Werkzeugachse rechtwinkligen Querebene aufgespannte Schneidenwinkel in der Start-Drehposition bei 0 liegen. Alternativ kann dieser Schneidenwinkel in der Start-Drehposition größer als 0 sein und zum Beispiel zwischen 0 und 90° liegen. In einer weiteren alternativen Prozessführung kann der Zustellvorschub des Drehwerkzeugs bis in die Arbeitsstellung von einer Schwenkbewegung des Schneidelementes in die End-Drehposition überlagert werden. In diesem Fall wird das Schneidelement gleichzeitig sowohl um den Zustellvorschub bis in die Arbeitsstellung rotiert als auch von seiner Start-Drehposition in seine End-Drehposition verschwenkt.

In einer Ausführungsform kann die Schneidkante des Schneidelementes zwischen seinen beiden Schneid-Ecken linear (das heißt geradlinig) verlaufen. Alternativ dazu kann der Kantenverlauf einen S-Schlag aufweisen, bei dem ein von einer ersten Schneid-Ecke ausgehender zurückgesetzter, insbesondere linearer Kantenabschnitt an einem mittleren Kantenabschnitt in einen vorgelagerten, insbesondere linearen Kantenabschnitt übergeht.

Die vorgelagerten und zurückgesetzten linearen Kantenabschnitte können zueinander parallel verlaufen. Zudem kann der Kantenverlauf mit Bezug auf eine Kanten-Mitte punktsymmetrisch ausgelegt sein.

Die Erfindung und ihre vorteilhaften Aus- und Weiterbildungen sowie deren Vorteile werden nachfolgend anhand von Zeichnungen näher erläutert. Es zeigen:
- Figur 1: in einer Seitenansicht eine Kurbelwelle;
- Figur 2: eine perspektivische Skizze, anhand der ein aus dem Stand der Technik bekannter Drehräumprozess eines Hublagersitzes der Kurbelwelle veranschaulicht ist;
- Figur 3: eine vergrößerte Detailansicht, die den aus dem Stand der Technik bekannten Drehräumprozess veranschaulicht;
- Figur 4: eine Skizze, in der ein Kantenverlauf der Schneidkante zwischen den beiden Schneid-Ecken in einer Seitenansicht gezeigt ist;
- Figuren 5 und 6: jeweils Ansichten entsprechend der Figuren 3 und 4 gemäß der Erfindung;
- Figuren 7 bis 10: jeweils Ansichten, die eine erste Prozessabfolge beim Drehräumen veranschaulichen;
- Figuren 11 bis 13: jeweils Ansichten, die eine zweite Prozessabfolge veranschaulichen;
- Figuren 14 bis 16: jeweils Ansichten, die eine dritte Prozessabfolge veranschaulichen; und
- Figur 17 und 18: jeweils einen Hublagersitz mit einer Oberflächen-Geometrie, die mittels des erfindungsgemäßen Räumwerkzeugs hergestellt ist.

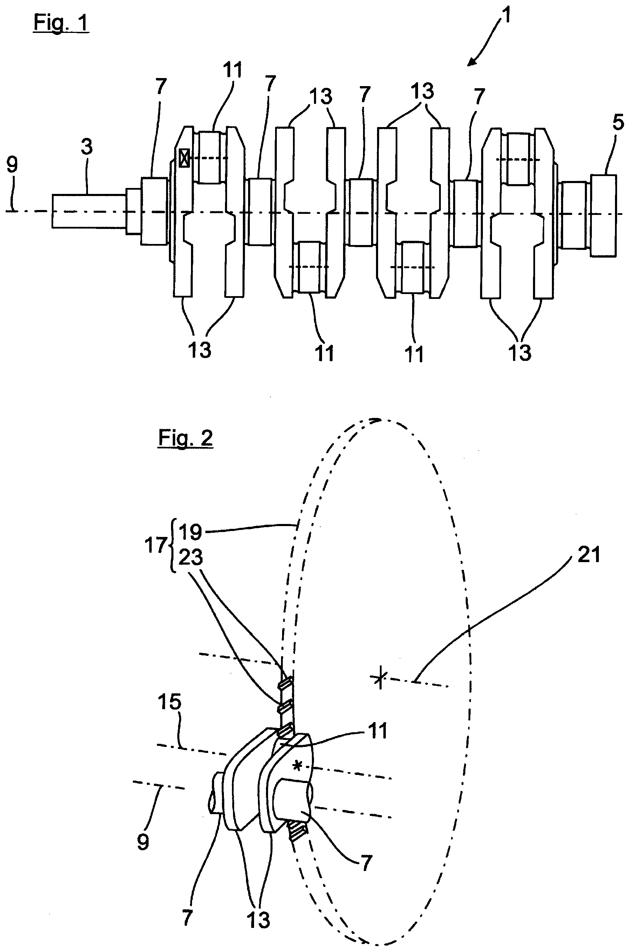

In der Figur 1 ist eine Kurbelwelle 1 gezeigt, die an ihren gegenüberliegenden Seiten einen Kurbelwellenzapfen 3 und einen Kurbelwellenflansch 5 aufweist. Die Kurbelwelle 1 ist mit Hauptlagersitzen 7 und mit Hublagersitzen 11 ausgebildet. Die Hauptlagersitze 7 sind zusammen mit dem Kurbelwellenzapfen 3 und dem Kurbelwellenflansch 5 koaxial zur Kurbelwellenachse 9 ausgerichtet, während die Hublagersitze 11 über Kurbelwangen 13 exzentrisch zur Kurbelwellenachse 9 angeordnet sind.

Zur Fertigbearbeitung wird die Kurbelwelle 1 in einer CNC-Drehräummaschine bearbeitet, und zwar unter anderem mittels Drehräumen, wie es in der Figur 2 angedeutet ist. In der Figur 2 ist beispielhaft eine Bearbeitung des Hublagersitzes 11 gezeigt, der in der Axialrichtung an seitlichen Radialeinstichen 10 in die Kurbelwangen 13 übergeht. Bei der Hublagersitz-Bearbeitung ist die Kurbelwelle 1 über nicht gezeigte Exzenterspannfutter beidseitig zwischen Hauptspindeln der CNC-Maschine eingespannt, so dass die Kurbelwelle 1 um eine Hublagersitz-Achse rotiert, die koaxial zur Hauptspindel-Achse 15 ausgerichtet ist. Zudem ist ein Räumwerkzeug 17 mit einem scheibenförmigen Werkzeugträger 19 angedeutet, der um eine zur Hauptspindel-Achse 15 achsparallele Werkzeugachse 21 drehbar ist. Der Werkzeugträger 19 ist außenumfangsseitig mit einer Vielzahl von Schneidelementen 23 bestückt, mit deren Hilfe bei der Kurbelwellenbearbeitung unterschiedliche Prozessschritte, etwa Drehräumen, durchgeführt werden können.

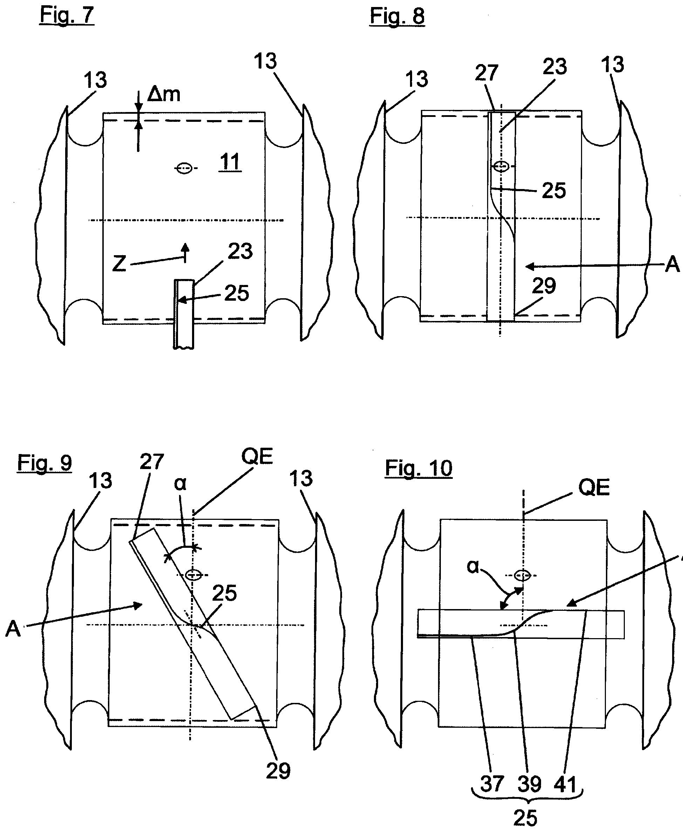

Bei einem solchen Drehräumprozess wird die Kurbelwelle 1 mit hoher Drehzahl um die Hauptspindel-Achse 15 rotiert. Demgegenüber wird das Drehräumwerkzeug 17 in einer kontinuierlichen langsamen, gegenläufigen Rotationsbewegung um einen Zustellvorschub Z (Figuren 7, 11, 12, 14) in eine Arbeitsstellung A (Figuren 8 bis 10, 13, 15 oder 16) bewegt. In der Arbeitsstellung A trägt das Schneidelement 23 mit seiner radial äußeren Schneidkante 25 ein Materialaufmaß Δm am Hublagersitz 11 auf.

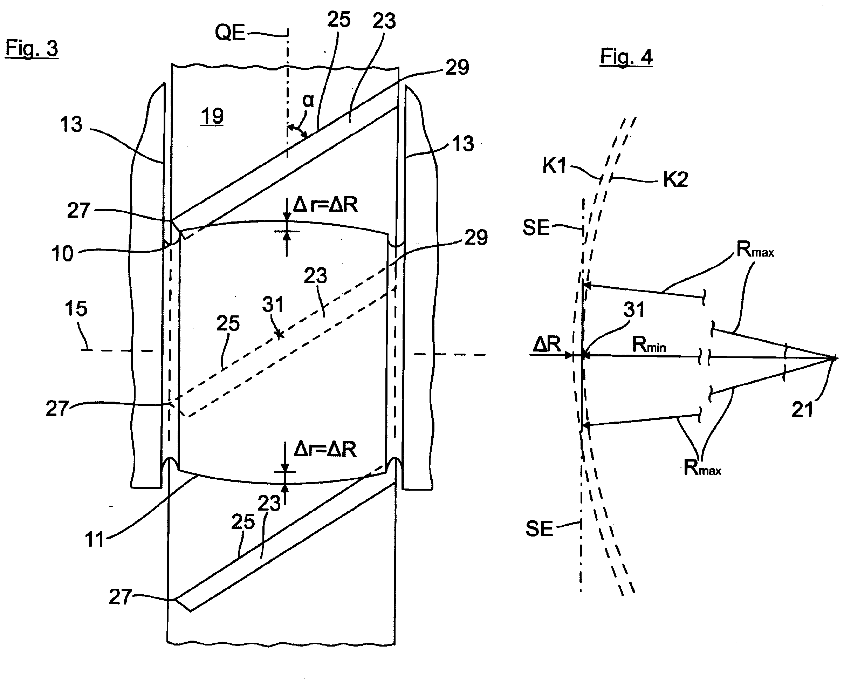

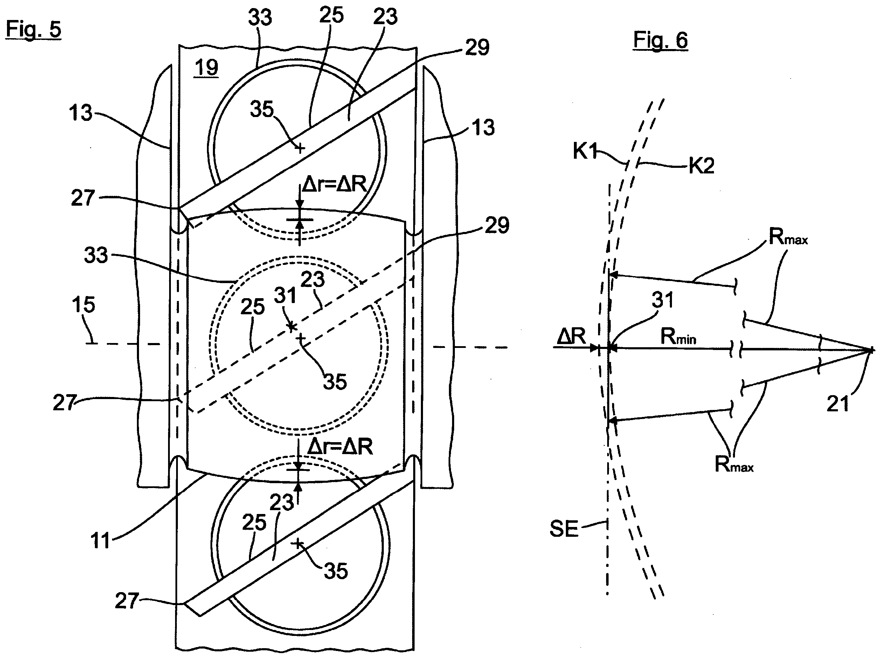

Die in der Figur 3 gezeigten Schneidenelemente 23 sind in einer unveränderlichen Position fest am Werkzeugträger 19 montiert. D.h. dass in der Figur 3 der zwischen der Schneidkante 25 und einer zur Werkzeugachse 21 rechtwinkligen Querebene QE aufgespannte Schneidenwinkel a (Figur 3) unveränderlich konstant ist. Die Schneidkante 25 des Schneidelementes 23 verläuft zwischen seinen beiden Schneid-Ecken 27, 29 linear (das heißt geradlinig). Zudem liegt die Schneidkante 25 durchgängig in einer planen Schneidebene SE (Figur 4 oder 6). Im Spanbearbeitungsprozess bewegen sich die Schneid-Ecken 27, 29 auf einer Kreisbahn K1, die einen Eckradius Rmax aufweist. Demgegenüber bewegt sich die Kantenmitte 31 auf einer Kreisbahn K2, die einen im Vergleich zum Eckradius Rₘₐₓ reduzierten Radius Rmin aufweist. Aufgrund dieser Kanten-Geometrie ergibt sich im Drehräumprozess die in der Figur 3 gezeigte ballige Oberflächen-Geometrie des Hauptlagersitzes 11, der in seiner Lagersitz-Mitte im Vergleich zu einer Zylinderform eine Materialaufdickung Δr aufweist, die im Bereich von wenigen Mikrometern liegt.

Im Unterschied zu dem anhand der Figuren 2 bis 4 erläuterten Stand der Technik ist in der Figur 5 das jeweilige Schneidelement 23 nicht mehr unveränderlich fest am Werkzeugträger 19 montiert. Vielmehr ist das Schneidelement 23 als ein Drehkörper ausgeführt, der in einer korrespondierenden Werkzeugaufnahme 33 des Werkzeugträgers 19 drehgelagert ist, und zwar um eine Schneidelement-Drehachse 35, die quer zur Werkzeugachse 21 verläuft und diese schneidet. Auf diese Weise kann das Schneidelement 23 vor oder insbesondere während des Spanbearbeitungsprozesses verschwenkt werden, um die Oberflächen-Geometrie des Lagersitzes 11 gezielt zu verändern.

Nachfolgend ist anhand der Figuren 7 bis 10 eine Prozessführung beim Drehräumen veranschaulicht. In den Figuren 7 bis 10 ist die Schneidkante 25 des Schneidelementes 23 nicht linear, das heißt geradlinig, ausgebildet, sondern vielmehr mit einem S-Schlag, bei dem ein von der ersten Schneid-Ecke 27 ausgehender zurückgesetzter linearer Kantenabschnitt 37 an einem mittleren Kantenabschnitt 39 in einen vorgelagerten linearen Kantenabschnitt 41 übergeht, der parallel zum zurückgesetzten Kantenabschnitt 37 verläuft. Der Kantenverlauf ist mit Bezug auf die Kanten-Mitte 31 punktsymmetrisch ausgelegt.

In der Prozessabfolge gemäß dem Figuren 7 bis 10 wird das Schneidelement 23 zu Beginn des Drehräumprozesses um den Zustellvorschub Z bis in die Arbeitsstellung A drehbewegt, in der das Drehräumen erfolgt. Der Schneidenwinkel a liegt dabei bis zum Erreichen der Arbeitsstellung A bei 0. Erst nach Erreichen der Arbeitsstellung A erfolgt eine Schwenkbewegung des Schneidelements 23 bis in eine End-Drehposition (Figur 10), in der der Schneidenwinkel a bei 90° liegt.

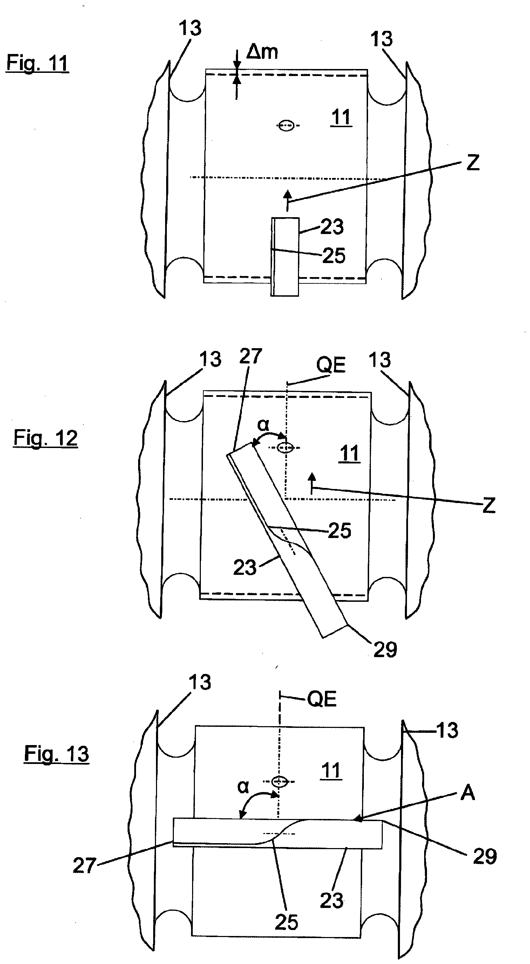

In den Figuren 11 bis 13 ist eine zweite Prozessführung gezeigt, bei der der Zustellvorschub Z des Werkzeugträgers 19 von einer Schwenkbewegung des Schneidelements 23 bis in seine End-Drehposition überlagert wird. Das heißt, dass der Zustellvorschub Z sowie die Schwenkbewegung des Schneidelementes 23 gleichzeitig erfolgen.

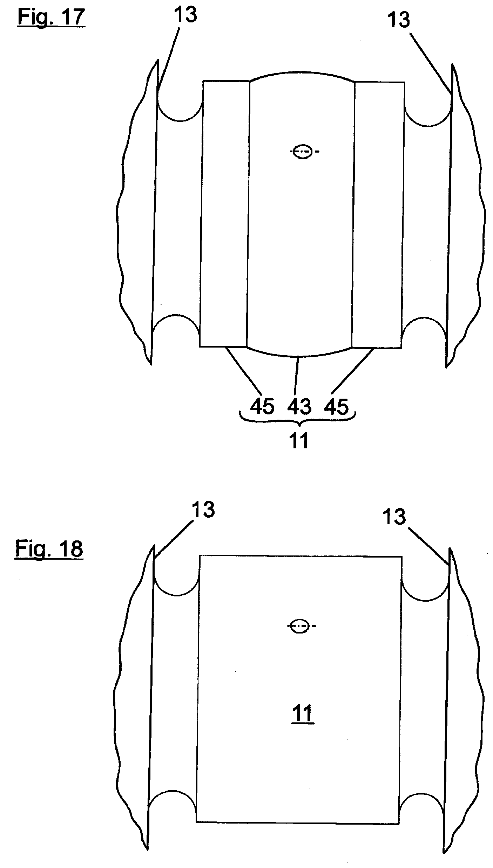

Mittels der in den Figuren 7 bis 13 gezeigten Prozessführungen werden die äußeren Schneid-Ecken 27, 29, die auf der Kreisbahn K1 mit dem EckRadius Rₘₐₓ umlaufen, in der Axialrichtung über den gesamten Lagersitz 11 bewegt. Auf diese Weise wird keine ballige, sondern vielmehr eine zylindrische Lagersitz-Geometrie erzielt, wie sie in der Figur 18 gezeigt ist.

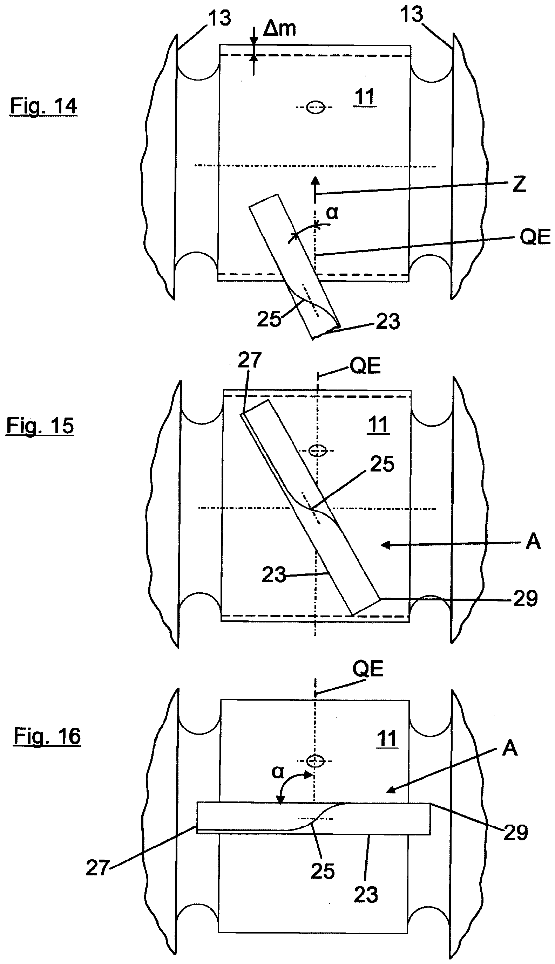

In den Figuren 14 bis 16 ist eine weitere Prozessführung angedeutet, bei der das Schneidelement 23 um den Zustellvorschub Z bis in die Arbeitsstellung A drehbewegt wird. Erst nach Erreichen der Arbeitsstellung A erfolgt eine Schwenkbewegung des Schneidelementes 23 in seine End-Drehposition. Im Unterschied zu den Figuren 7 bis 10 weist in den Figuren 14 bis 16 das Schneidelement 23 bereits während des Zustellvorschubs Z einen Schneidenwinkel a größer als 0 auf. Erst nach Erreichen der Arbeitsstellung A erfolgt die Schwenkbewegung des Schneidelementes 23 in seine End-Drehposition.

In den, in den Figuren 14 bis 16 gezeigten Prozessführungen bewegen sich die äußeren Schneid-Ecken 27, 29 in der Axialrichtung nicht über den gesamten Lagersitz 11, sondern vielmehr nur in dessen axial äußeren Lagersitzbereichen. Auf diese Weise ergibt sich die in der Figur 17 gezeigte Lagersitz-Geometrie. In der Figur 17 weist der Hublagersitz 11 eine mittige Aufdickung 43 auf, die nicht von den Schneid-Ecken 27, 29 bearbeitet wurde. Die mittige Aufdickung 43 geht in Axialrichtung beidseitig in durchmesserreduzierte zylindrische Abschnitte 45 über, die von den Schneid-Ecken 27, 29 bearbeitet wurden. Die Oberflächen-Geometrie des Lagersitzes 11 kann daher durch eine entsprechende Schwenkverstellung des Schneidelementes 23 während der Drehräumbearbeitung ohne weiteres variiert werden.

## Patentansprüche

1. Drehräumwerkzeug für eine Drehräummaschine zur Fertigbearbeitung eines um eine Werkstückachse (15) rotationssymmetrischen Werkstück-Außenumfangs (11), insbesondere eines Kurbelwellen-Lagersitzes, mit einem scheibenförmigen Werkzeugträger (19), der um eine, zur Werkstückachse (15) achsparallele Werkzeugachse (21) drehbar ist und der außenumfangsseitig mit zumindest einem Schneidelement (23) zum Drehräumen des Werkstück-Außenumfangs (11) bestückt ist, wobei das Schneidelement (23) eine radial äußere Schneidkante (25) aufweist, und wobei das Drehräumwerkzeug für einen Drehräumprozess geeignet ist, bei dem das Werkstück (1) um die Werkstückachse (15) rotiert und der Werkzeugträger (19) in einer gegenläufigen Drehrichtung um einen Zustellvorschub (Z) drehbewegt wird, wodurch das Schneidelement (23) mit seiner radial äußeren Schneidkante (25) ein Materialaufmaß (Δm) am Werkstück-Außenumfang (11) abträgt, **dadurch gekennzeichnet, dass** zur Einstellung der Oberflächen-Geometrie des Werkstück-Außenumfangs (11) das Schneidelement (23) schwenkbar im Werkzeugträger (19) gelagert ist, wobei das Schneidelement (23) ein Drehkörper ist, der in einer Werkzeugaufnahme (33) des Werkzeugträgers (19) um eine Schneidelement-Drehachse (35) drehgelagert ist, wobei die Schneidelement-Drehachse (35) quer zur Werkzeugachse (21) verläuft und die Werkzeugachse (21) schneidet,
und wobei während des Spanbearbeitungsprozesses eine Schwenkposition des Schneidelements (23) gesteuert änderbar ist.

2. Drehräumwerkzeug nach Anspruch 1, **dadurch gekennzeichnet, dass** mit der Änderung der Schwenkposition sich eine Neigung des Schneidelements (23) mit Bezug auf die Werkzeugachse (21) ändert.

3. Drehräumwerkzeug nach einem der vorhergehenden Ansprüche, **dadurch gekennzeichnet, dass** die Schneidkante (25) durchgängig in einer planen Schneidebene (SE) verläuft, und zwar zwischen Schneid-Ecken (27, 29), und dass sich im mit dem Drehräumwerkzeug durchgeführten Spanbearbeitungsprozess die Schneid-Ecken (27, 29) auf einer Kreisbahn (K1) bewegen können, die einen Eckradius (Rₘₐₓ)
aufweist, und dass sich im mit dem Drehräumwerkzeug durchgeführten Spanbearbeitungsprozess der Schneidkanten-Bereich zwischen den beiden Schneid-Ecken (27, 29) auf einer Kreisbahn (K2) bewegen kann, deren Radius kleiner als der Eckradius (Rₘₐₓ) ist und bis zu einem Minimalwert (Rₘᵢₙ) in der Schneidkanten-Mitte (31) reduziert ist, die zwischen den beiden Schneid-Ecken (27, 29) liegt.

4. Drehräumwerkzeug nach einem der vorhergehenden Ansprüche, **dadurch gekennzeichnet, dass** die Schneidkante (25) des Schneidelements (23) zwischen seinen beiden Schneid-Ecken (27, 29) linear bzw. geradlinig verläuft oder mit einem S-Schlag verläuft, bei dem ein von einer ersten Schneid-Ecke (27) ausgehender zurückgesetzter, insbesondere linearer Kantenabschnitt (37) an einem mittleren Kantenabschnitt (39) in einen vorgelagerten, insbesondere linearen Kantenabschnitt (41) übergeht.

5. Drehräumwerkzeug nach Anspruch 4, **dadurch gekennzeichnet,**
**dass** die vorgelagerten und zurückgesetzten Kantenabschnitte (37, 41) zueinander parallel sind, und/oder dass der Verlauf der Schneidkante (25) mit Bezug auf eine Schneiden-Mitte (25) punktsymmetrisch ausgelegt ist.

6. Verfahren zur Spanbearbeitung eines rotationssymmetrischen Werkstück-Außenumfangs (11) durch Drehräumen mittels eines Drehräumwerkzeugs nach einem der vorhergehenden
Ansprüche.

7. Verfahren nach Anspruch 6, **dadurch gekennzeichnet, dass** das Schneidelement (23) zu Beginn des Spanbearbeitungsprozesses um den Zustellvorschub (Z) bis in eine Arbeitsstellung (A) zugestellt wird, in der die Spanbearbeitung erfolgt, und dass insbesondere in einer Prozessführung das Schneidelement (23) bei gleichbleibender, das heißt unveränderte Start-Drehposition bis in die Arbeitsstellung (A) zugestellt wird, und dass erst nach Erreichen der Arbeitsstellung (A) eine Schwenkbewegung des Schneidelements (23) von der Start-Drehposition in eine End-Drehposition erfolgt.

8. Verfahren nach Anspruch 7, **dadurch gekennzeichnet, dass** der zwischen der Schneidkante (25) und einer zur Werkzeugachse (21) rechtwinkligen Querebene (QE) aufgespannte Schneidenwinkel (a) in der Start-Drehposition bei 0 liegt oder bei einem Wert zwischen 0 und 90° liegt.

9. Verfahren nach Anspruch 7, **dadurch gekennzeichnet, dass** in einer weiteren Prozessführung der Zustellvorschub (Z) des Werkzeugträgers (19) in die Arbeitsstellung (A) von einer Schwenkbewegung des Schneidelements (23) in die End-Drehposition überlagert wird.

## Claims

1. Rotary broach for a rotary broaching machine for the final processing of a workpiece outer circumference (11) which is rotationally symmetrical about a workpiece axis (15), in particular of a crankshaft bearing seat, having a disc-shaped tool carrier (19) which can be rotated about a tool axis (21) which is axially parallel to the workpiece axis (15) and which is populated on the outer circumference with at least one cutting element (23) for rotary-broaching the workpiece outer circumference (11), wherein the cutting element (23) has a radially outer cutting edge (25), and wherein the rotary broach is suitable for a rotary broaching procedure in which the workpiece (1) rotates about the workpiece axis (15) and the workpiece carrier (19) is rotated in a contrary direction of rotation by the supply forwards movement (Z), as a result of which the cutting element (23) abrades a material oversize (Δm) on the workpiece outer circumference (11) with its radially outer cutting edge (25), **characterised in that** for setting the surface geometry of the workpiece outer circumference (11) the cutting element (23) is mounted pivotably in the tool carrier (19), wherein the cutting element (23) is a rotary body which is rotationally mounted in a tool receptacle (33) of the tool carrier (19) about a cutting element rotational axis (35), wherein the cutting element rotational axis (35) extends perpendicularly to the tool axis (21) and cuts the tool axis (21), and wherein during the machining process a pivot position of the cutting element (23) can be altered in a controlled manner.

2. Rotary broach according to claim 1, **characterised in that** with the changing of the pivot position an inclination of the cutting element (23) with reference to the tool axis (21) changes.

3. Rotary broach according to any of the preceding claims, **characterised in that** the cutting edge (25) extends continuously in a planar cutting plane (SE) between cutting corners (27, 29), and that in the machining procedure carried out with the rotary broach the cutting corners (27, 29) are able to move on a circular path (K1) which has a corner radius (Rₘₐₓ) and that in the machining procedure carried out with the rotary broach the cutting edge region between the two cutting corners (27, 29) is able to move on a circular path (K2), the radius of which is smaller than the corner radius (Rₘₐₓ) and is reduced as far as a minimum value (Rₘᵢₙ) in the cutting-edge centre (31) which is located between the two cutting corners (27, 29).

4. Rotary broach according to any of the preceding claims, **characterised in that** the cutting-edge (25) of the cutting element (23) runs linearly or in a straight line between its two cutting corners (27, 29) or runs with an S-twist, in which a recessed, particularly linear edge portion (37) which starts from a first cutting corner (27) transitions at a central edge portion (39) into a front-positioned, particularly linear edge portion (41).

5. Rotary broach according to claim 4, **characterised in that** the front-positioned and recessed edge portions (37, 41) are parallel to one another, and/or that the course of the cutting edge (25) is point-symmetrical with respect to a blade-centre (25).

6. Method for machining a rotationally symmetrical workpiece outer circumference (11) by means of rotary broaching using a rotary broach according to any of the preceding claims.

7. Method according to claim 6, **characterised in that** at the beginning of the machining procedure the cutting element (23) is supplied by the supply forwards movement (Z) as far as a working position (A) in which the machining is carried out, and that particularly in a process control the cutting element (23) is fed as far as the working position (A), with a consistent, i.e. non-changed start rotational position, and that only after reaching the working position (A) a pivot movement of the cutting element (23) from the start rotational position into an end rotational position is effected.

8. Method according to claim 7, **characterised in that** in the start rotational position the cutting angle (a) subtended between the cutting-edge (25) and a transverse plane (QE) which is at right angles to the tool axis (21) is 0 or a value between 0 and 90°.

9. Method according to claim 7, **characterised in that** in a further process control the supply forwards movement (Z) of the tool carrier (19) into the working position (A) is superimposed by a pivot movement of the cutting element (23) into the end rotational position.

## Revendications

1. Outil de brochage rotatif pour une machine de brochage rotatif pour la finition d'un pourtour de pièce (11) à symétrie de rotation par rapport à un axe de pièce (15), en particulier d'un palier de vilebrequin, avec un porte-outil (19) en forme de disque qui est rotatif autour d'un axe d'outil (21) parallèle à l'axe de pièce (15) et qui est équipé sur le côté du pourtour d'au moins un élément de coupe (23) pour le brochage rotatif du pourtour de pièce (11), dans lequel l'élément de coupe (23) présente un bord de coupe radialement extérieur (25), et dans lequel l'outil de brochage rotatif est adapté pour un processus de brochage rotatif, au cours duquel la pièce (1) tourne autour de l'axe de pièce (15) et le porte-outil (19) est déplacé en rotation dans une direction de rotation opposée selon une avance de réglage (Z), moyennant quoi l'élément de coupe (23) érode une surépaisseur de matière (Δm) avec son bord de coupe radialement extérieur (25) sur le pourtour de pièce (11), **caractérisé en ce que** pour ajuster la géométrie de surface du pourtour de pièce (11), l'élément de coupe (23) est monté pivotant dans le porte-outil (19), dans lequel l'élément de coupe (23) est un corps rotatif qui est monté rotatif dans un logement d'outil (33) du porte-outil (19) autour d'un axe rotatif d'élément de coupe (35), dans lequel l'axe rotatif d'élément de coupe (35) s'étend transversalement à l'axe d'outil (21) et coupe l'axe d'outil (21), et dans lequel pendant le processus d'usinage, une position pivotante de l'élément de coupe (23) peut être modifiée de manière contrôlée.

2. Outil de brochage rotatif selon la revendication 1, **caractérisé en ce que**, avec le changement de la position pivotante, une inclinaison de l'élément de coupe (23) varie par rapport à l'axe d'outil (21).

3. Outil de brochage rotatif selon l'une quelconque des revendications précédentes, **caractérisé en ce que** le bord de coupe (25) s'étend en continu dans un plan de coupe plan (SE), à savoir entre des coins de coupe (27, 29), et **en ce que**, dans le processus d'usinage réalisé avec l'outil de brochage rotatif, les coins de coupe (27, 29) peuvent se déplacer sur une trajectoire circulaire (K1) présentant un rayon d'angle (Rₘₐₓ), et **en ce que** dans le processus d'usinage réalisé avec l'outil de brochage rotatif, la région des bords de coupe entre les deux coins de coupe (27, 29) peut se déplacer sur une trajectoire circulaire (K2) dont le rayon est inférieur au rayon d'angle (Rₘₐₓ) et est réduit jusqu'à une valeur minimale (Rₘᵢₙ) au centre des bord de coupe (31) qui se situe entre les deux coins de coupe (27, 29).

4. Outil de brochage rotatif selon l'une quelconque des revendications précédentes, **caractérisé en ce que** le bord de coupe (25) de l'élément de coupe (23) s'étend linéairement et/ou en ligne droite entre ses deux coins de coupe (27, 29) ou s'étend avec une course en S dans laquelle une section de bord (37) en retrait, en particulier linéaire, s'étendant à partir d'un premier coin de coupe (27) au niveau d'une section de bord central (39) dépasse dans une section de bord en amont, en particulier linéaire (41).

5. Outil de brochage rotatif selon la revendication 4, **caractérisé en ce que** les sections de bord en amont et en retrait (37 41) sont parallèles l'une à l'autre, et/ou **en ce que** le profil du bord de coupe (25) est conçu à symétrie ponctuelle par rapport à un centre de coupe (25).

6. Procédé d'usinage d'un pourtour de pièce (11) à symétrie de rotation par brochage rotatif au moyen d'un outil de brochage rotatif selon l'une quelconque des revendications précédentes.

7. Procédé selon la revendication 6, **caractérisé en ce que** l'élément de coupe (23) au début du processus d'usinage est amené selon l'avance d'amenée (Z) jusque dans une position de travail (A) dans laquelle a lieu l'usinage, et **en ce qu'**en particulier dans une commande de processus l'élément de coupe (23) est amené dans une position de rotation de démarrage constante, c'est-à-dire inchangée, jusque dans la position de travail (A), et **en ce que** ce n'est qu'après avoir atteint la position de travail (A) qu'un mouvement pivotant de l'élément de coupe (23) a lieu de la position de rotation de démarrage à une position de rotation finale.

8. Procédé selon la revendication 7, **caractérisé en ce que** l'angle de coupe (a) monté entre le bord de coupe (25) et un plan transversal (QE) à angle droit par rapport à l'axe d'outil (21) se situe dans la position de rotation de démarrage sur 0 ou sur une valeur comprise entre 0 et 90°.

9. Procédé selon la revendication 7, **caractérisé en ce que**, dans une autre commande de processus, l'avance d'amenée (Z) du porte-outil (19) est superposée dans la position de travail (A) par un mouvement pivotant de l'élément de coupe (23) dans la position de rotation finale.
